# NEW EUROPEAN PATENT SPECIFICATION

(11) **EP 3 674 645 B2**
(45) Date of publication and mention of the opposition decision: **24.07.2024**
(45) Mention of the grant of the patent: 04.08.2021
(21) Application number: 19190805.2
(22) Date of filing: 08.08.2019
(51) Int. Cl.: F28D 9/00, F28F 9/02, F16L 41/08

(54) **PLATE HEAT EXCHANGER**
PLATTENWÄRMETAUSCHER
ÉCHANGEUR THERMIQUE À PLAQUE

(30) Priority: 28.12.2018 CN 201811632357
(43) Date of publication of application: 01.07.2020
(73) Proprietor: Danfoss A/S, 6430 Nordborg (DK)
(72) Inventor: Zhang, Zhifeng, 6430 Nordborg (DK); Luo, Jun, 6430 Nordborg (DK)
(74) Representative: Keil & Schaafhausen Patentanwälte PartGmbB

(56) References cited:
- EP-A1- 1 890 103
- EP-A1- 1 890 103
- DE-A1- 102005 050 738
- DE-A1- 102005 050 738
- DE-A1- 102010 045 535
- DE-A1- 102010 045 535
- JP-U- S57 107 083
- KR-B1- 101 646 484
- US-A1- 2015 021 904
- US-A1- 2015 021 904
- US-B1- 6 394 179
- "Industrial Brazing Practice", 1 January 2004, CRC PRESS, article ROBERTS PHILIP: "Welding and Brazing", pages: 27, XP055922924
- GLENN C. HOURAHAN, P.E.: "Research on Copper Joining Techniques Evaluates New Designs and Brazing Methods. Copper Applications in Innovative Technology", INNOVATIONS, 1 December 1998 (1998-12-01), XP055820842, Retrieved from the Internet <URL:https://www.copper.org/publications/newsletters/innovations/1998/12/techupdate.html> [retrieved on 20210705]
- ANONYMOUS: "Soldering and Brazing Explained", COPPER DEVELOPMENT ASSOCIATION INC., Retrieved from the Internet <URL:https://www.copper.org/applications/plumbing/techcorner/soldering_brazing_explained.html>
- translation of JP57107083U
- translation of KR101646484

## Description

### TECHNICAL FIELD

Embodiments of the present invention relate to a plate heat exchanger.

### BACKGROUND

In a conventional plate heat exchanger, an opening is formed in a cover plate, and a connection pipe is fixed by soldering, brazing or welding to the cover plate at a position corresponding to the opening.

DE 10 2010 045 535 A1 discloses a plate type heat exchanger comprising a cover plate and a connection pipe. The connection pipe is inserted into an opening of cover plate which opening is surrounded by a flanging protruding in a direction from the body of the cover plate towards an outside of the heat exchanger. The end of the connection pipe which is inserted into the flanging has a less radial size than the body of the connection pipe. The connection pipe comprises a step which is arranged in the middle of the body.

US 2015/0021904 A1 shows a brazed fitting assembly for a heat exchanger. The heat exchanger comprises a cover plate and a connection pipe comprising a first end in contact with the cover plate. The cover plate comprises a flanging in which the end of the connection pipe is inserted. The heat exchanger plate next to the cover plate comprises another flanging which is inserted into the connection pipe.

DE 10 2005 050 738 A1 discloses a plate heat exchanger according to the preambles of claim 1 and claim 4, the document shows another heat exchanger of the plate type having a cover plate with an opening surrounded by a flanging. A connecting pipe comprises a radial protrusion abutting against the end of the flanging of the cover plate.

EP 1 890 103 A1 shows a pipe connecting structure for a heat exchanger. A connection pipe having an end of a larger diameter is mounted on a cover plate having an opening surrounded by a flanging. The connecting pipe comprises a step which contacts the flanging of the cover plate.

### SUMMARY

An object of embodiments of the present invention is to provide a plate heat exchanger, for example, thereby reducing a difficulty of a process of soldering, brazing or welding a connection pipe to a cover plate.

Embodiments of the present invention provide a plate heat exchanger according to claim 1 or claim 4.

According to embodiments of the present invention, the second end of the connection pipe has a tapered shape, and has a radial size gradually increased in a direction from the first end of the connection pipe towards the second end of the connection pipe.

According to embodiments of the present invention, a connection pipe segment composed of the body and the second end of the connection pipe has a tapered shape, and has a radial size gradually increased in a direction from the first end of the connection pipe towards the second end of the connection pipe.

According to embodiments of the present invention, the first end of the connection pipe abuts against the body of the cover plate.

According to embodiments of the present invention, the flanging has a cylindrical shape.

With the plate heat exchanger according to the embodiments of the present invention, for example, the difficulty of the process of soldering, brazing or welding the connection pipe to the cover plate can be reduced.

### BRIEF DESCRIPTION OF THE DRAWINGS

FIG. 1 is a schematic perspective view of a plate heat exchanger according to an embodiment;
FIGS. 2 to 4 are partial sectional views of a cover plate and a connection pipe of a plate heat exchanger according to a first embodiment;
FIG. 5 is a partial sectional view of the cover plate, the connection pipe, and a heat exchange medium circulation pipe of the plate heat exchanger according to the first embodiment of the present invention;
FIG. 6 is a partial sectional view of a cover plate and a connection pipe of a plate heat exchanger according to a second embodiment;
FIG. 7 is a sectional view of the connection pipe of the plate heat exchanger according to the second embodiment;
FIG. 8 is a partial sectional view of a cover plate and a connection pipe of a plate heat exchanger according to a third embodiment;
FIGS. 9 and 10 are partial sectional views of a cover plate and a connection pipe of a plate heat exchanger according to a fourth embodiment not covered by the claims;
FIG. 11 is a partial sectional view of a cover plate and a connection pipe of a plate heat exchanger according to a fifth embodiment;
FIG. 12 is a partial sectional view of the cover plate, the connection pipe, and a heat exchange medium circulation pipe of the plate heat exchanger according to the fifth embodiment of the present invention;
FIG. 13 is a partial sectional view of the cover plate and the connection pipe of the plate heat exchanger according to the fifth;
FIG. 14 is a partial sectional view of the cover plate, the connection pipe, and the heat exchange medium circulation pipe of the plate heat exchanger according to the fifth embodiment of the present invention;
FIG. 15 is a partial sectional view of a cover plate and a connection pipe of a plate heat exchanger according to a sixth embodiment not covered by the claims;
FIG. 16 is a partial sectional view of the cover plate, the connection pipe, and a heat exchange medium circulation pipe of the plate heat exchanger according to the sixth embodiment not covered by the claims; and
FIG. 17 is a partial sectional view of the cover plate and the connection pipe of the plate heat exchanger according to the sixth embodiment not covered by the claims.

### DETAILED DESCRIPTION

A further description will be made as below with reference to embodiments taken in conjunction with the accompanying drawings.

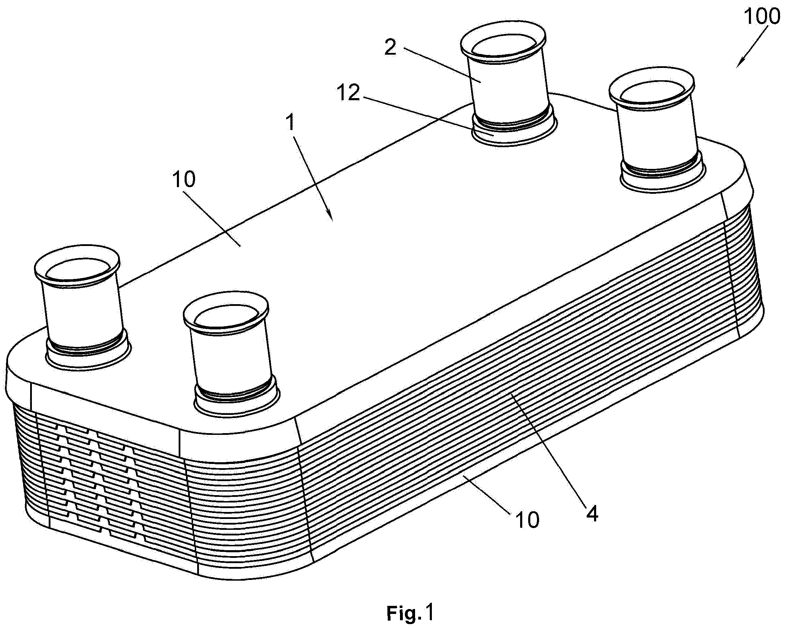

Referring to FIGS. 1 to 17, a plate heat exchanger 100 includes: a plurality of heat exchange plates 4; cover plates (or referred to as base plates or respectively referred to as the cover plate and the base plate) 1 respectively covering the plurality of heat exchange plates 4 on both sides of the plurality of heat exchange plates 4, and each including: a body 10; an opening 11 formed in the body 10; and a flanging 12 surrounding the opening 11 and protruding in a direction from the body 10 of the cover plate 1 towards an outside of the heat exchanger 100; and a connection pipe 2 including: a first end 21 and a second end 22 opposite to each other, and a body 20 between the first end 21 and the second end 22. One of the first end 21 of the connection pipe 2 and the flanging 12 of the cover plate 1 is inserted in the other of the first end 21 of the connection pipe 2 and the flanging 12 of the cover plate 1. The flanging 12 may have a tubular shape, such as a cylindrical shape and a conical shape.

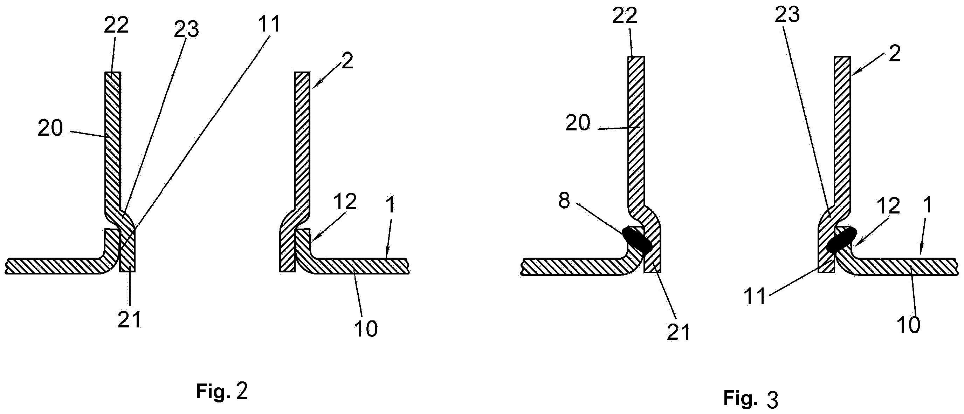

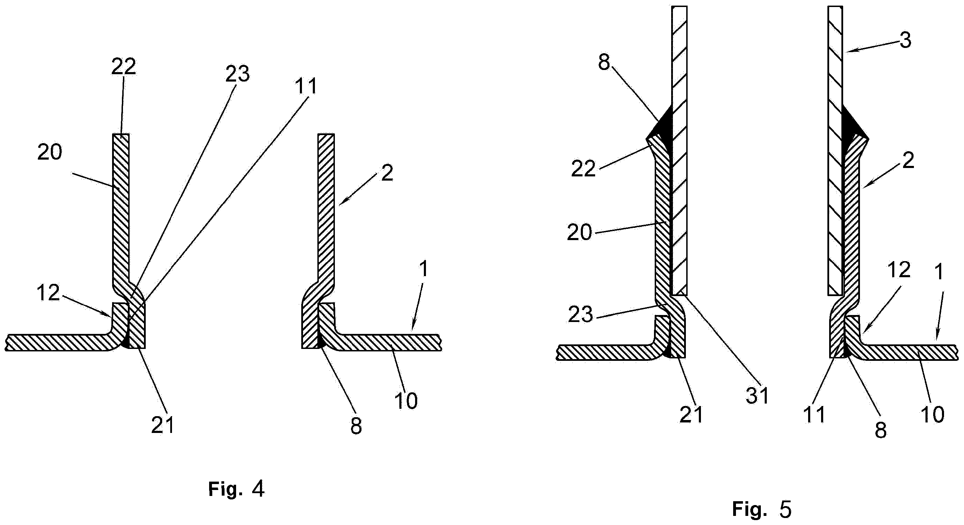

Referring to FIGS. 2 to 8, the first end 21 of the connection pipe 2 has a less radial size than the body 20 of the connection pipe 2, the connection pipe 2 further includes a step 23 between the body 20 and the first end 21 of the connection pipe 2, and the first end 21 of the connection pipe 2 is inserted in the flanging 12 of the cover plate 1. The step 23 of the connection pipe 2 abuts against an end of the flanging 12 of the cover plate 1. Referring to FIG. 5, according to examples of the present invention, the plate heat exchanger 100 further includes: a heat exchange medium circulation pipe 3 inserted in the connection pipe 2, and having an end 31 abutting against the step 23 of the connection pipe 2. According to embodiments, referring to FIG. 2, the connection pipe 2 and the cover plate 1 are prefixed together, for example by expanded-connecting, spot welding, or the like before they are soldered, brazed or welded. After being prefixed together, the connection pipe 2 and the cover plate 1 may be completely fixed by means of a seam 8 (referring to FIGS. 4, 5, 6, 8, 9, 10, 13 and 14) formed by soldering or brazing (for example by brazing) or a seam 8 (referring to FIGS. 3, 11, 12, 15 and 16) formed by welding (for example by laser welding). After the connection pipe 2 and the cover plate 1 are completely fixed, referring to FIGS. 5, 12, 14 and 16, a part of the heat exchange medium circulation pipe 3 (such as a copper pipe or a copper alloy pipe) is inserted into the connection pipe 2, and then the heat exchange medium circulation pipe 3 and the connection pipe are connected together by means of a seam 8 formed by soldering or brazing (for example by brazing).

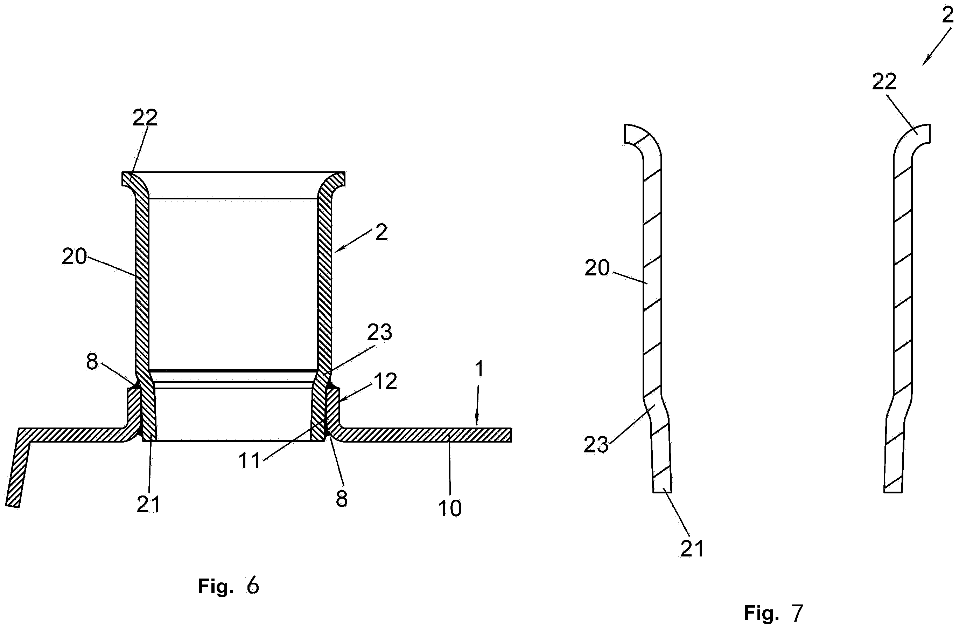

Referring to FIGS. 6 and 7, the connection pipe has advantages such as excellent manufacturability, less manufacturing difficulty, and uneasy occurrence of manufacturing stress concentration.

Referring to FIG. 3, when the connection pipe 2 is joined to the cover plate 1 by welding (for example by laser welding), a molten bath formed by welding is needed to penetrate the cover plate 1 and to have a certain depth in the first end of the connection pipe 2. Even if a welding power is excessively large so that the molten bath penetrates a pipe wall of the connection pipe 2, the heat exchange plate 4 will not be damaged. A penetrating depth requirement of the molten bath is considerably decreased. A depth of the molten bath is simply required to be greater than a minimal depth, and a requirement for a variation range of the depth of the molten bath is not high.

Referring to FIG. 6, when the connection pipe 2 is joined to the cover plate 1 by soldering or brazing (for example by brazing), all the seams 8 are located inside the heat exchanger 100 so that an appearance will not be undermined by soldering or brazing metal.

Referring to FIGS. 6 and 7, the first end 21 of the connection pipe 2 has a tapered shape, and has a radial size gradually increased in a direction from the first end 21 of the connection pipe 2 towards the second end 22 of the connection pipe 2, thereby effectively ensuring convenience of assembling the connection pipe 2 with the cover plate 1 while reducing a gap between the connection pipe 2 and the flanging 12 of the cover plate 1 to guarantee soldering, brazing or welding quality.

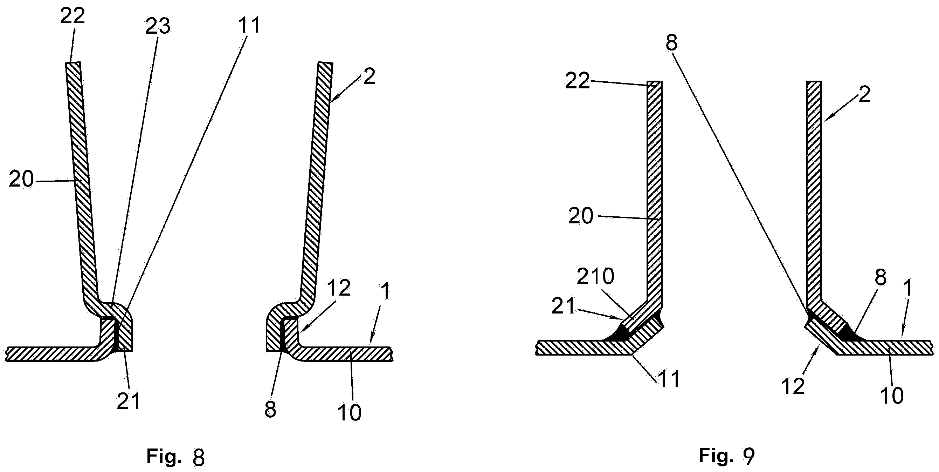

Referring to FIGS. 5 to 8 and 11 to 17, the second end 22 of the connection pipe 2 has a tapered shape, and has a radial size gradually increased in the direction from the first end 21 of the connection pipe 2 towards the second end 22 of the connection pipe 2. According to examples of the present invention, referring to FIG. 8, a connection pipe segment composed of the body 20 and the second end 22 of the connection pipe 2 has a tapered shape, and has a radial size gradually increased in the direction from the first end 21 of the connection pipe 2 towards the second end 22 of the connection pipe 2. In other words, the remaining portion of the connection pipe 2 except the first end 21 has a tapered shape.

Referring to FIG. 8, the connection pipe 2 has a tapered wall. An inner diameter, at a side adjacent to the cover plate 1, of the connection pipe 2 is less than an inner diameter of a top of the connection pipe 2. The connection pipe 2 may match heat exchange medium circulation pipes 3 of different sizes while it can be ensured that a soldering or brazing gap between the connection pipe 2 and the heat exchange medium circulation pipe 3 inserted in it is zero, improving the soldering or brazing quality.

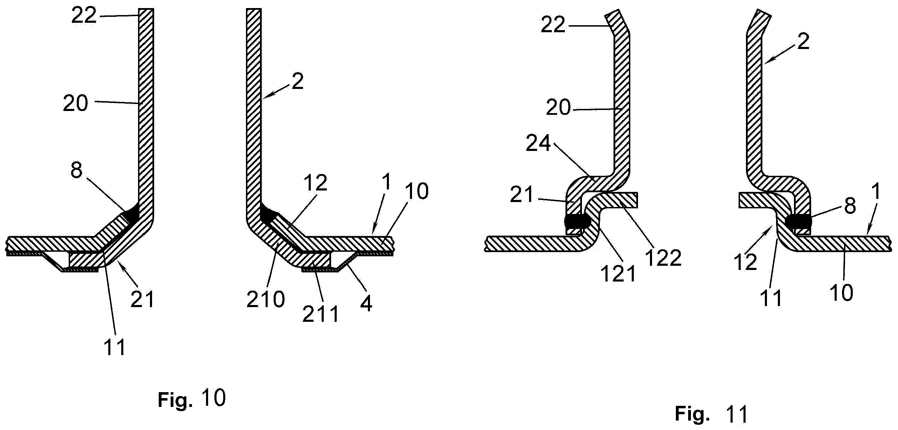

Referring to FIGS. 9 and 10, the first end 21 of the connection pipe 2 includes a tapered portion 210 which has a radial size gradually decreased in the direction from the first end 21 of the connection pipe 2 towards the second end 22 of the connection pipe 2; and the flanging 12 has a tapered shape, and has a radial size gradually decreased in the direction from the body 10 of the cover plate 1 towards the outside of the heat exchanger 100. The tapered portion 210 of the first end 21 of the connection pipe 2 may have a same taper as the flanging 12. Referring to FIG. 10, the first end 21 of the connection pipe 2 further includes a flange 211 which extends radially outwards from the tapered portion 210 of the first end 21 of the connection pipe 2 at a side of the tapered portion 210 facing away from the body 20 of the connection pipe 2, and which is in contact with the body 10 of the cover plate 1. Referring to FIG. 9, according to examples, the flanging 12 of the cover plate 1 is inserted in the first end 21 of the connection pipe 2. Referring to FIG. 10, according to examples, the first end 21 of the connection pipe 2 is inserted in the flanging 12 of the cover plate 1, and the flange 211 of the connection pipe 2 is in contact with a surface of the body 10 of the cover plate 1 facing away from the flanging 12. The flange 211 is located between the heat exchange plate 4 and the cover plate 1.

Referring to FIGS. 9 and 10, a self-adaptive assembling structure is formed by the tapered portion 210 of the first end 21 of the connection pipe 2 and the tapered flanging 12, effectively ensuring an assembling gap, avoiding soldering, brazing or welding defects such as a rosin joint, and thus improving the quality of the seam. Further, with a structure as in the embodiment shown in FIG. 10, a soldering, brazing or welding area can be effectively guaranteed, an assembling gap can be reduced, and thus the quality of the seam is improved. In addition, a sealing can be achieved, a strength of a product can be increased, and the number of parts can be reduced.

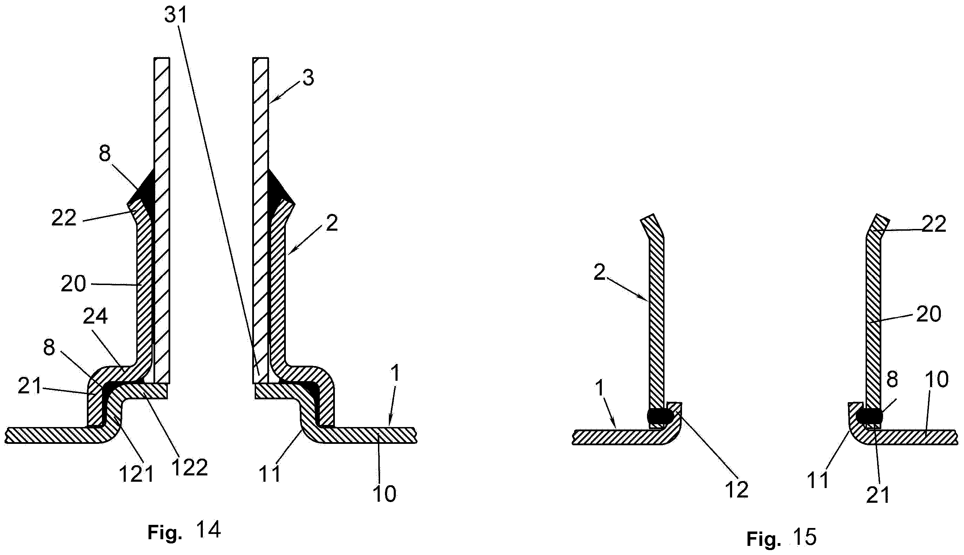

Referring to FIGS. 11 and 14, the first end 21 of the connection pipe 2 has a greater radial size than the body 20 of the connection pipe 2, the connection pipe 2 further includes a step 24 between the body 20 and the first end 21 of the connection pipe 2, and the flanging 12 of the cover plate 1 is inserted in the first end 21 of the connection pipe 2. The flanging 12 includes: a tubular part 121 protruding in the direction from the body 10 of the cover plate 1 towards the outside of the heat exchanger 100; and a step 122 which extends radially inwards from the tubular part 121 at a side of the tubular part 121 facing away from the body 10 of the cover plate 1 and which is in contact with the step 24 of the connection pipe 2.

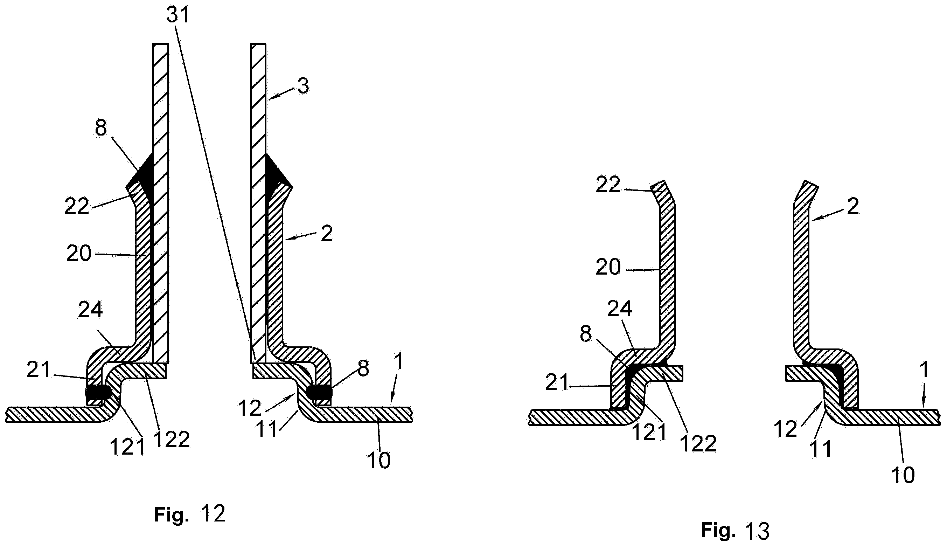

The flanging 12 of the cover plate 1 is inserted in the first end 21 of the connection pipe 2. Referring to FIGS. 12 and 14, the plate heat exchanger 100 further includes: a heat exchange medium circulation pipe 3 inserted in the connection pipe 2, an end of the step 122 of the flanging 12 of the cover plate 1 facing away from the tubular part 121 extends into the body 20 of the connection pipe 2 when viewed in an axial direction of the connection pipe 2, and the heat exchange medium circulation pipe 3 has an end 31 abutting against the end of the step 122 of the flanging 12 of the cover plate 1.

Referring to FIGS. 11 and 14, an adaptive overlapping structure is formed by the flanging 12 of the cover plate 1 and the first end 21 of the connection pipe 2, thereby considerably increasing an overlapping area between the flanging 12 of the cover plate 1 and the first end 21 of the connection pipe 2, and thus greatly increasing a soldering, brazing or welding strength. In addition, the end 31 of the heat exchange medium circulation pipe 3 abuts against the end of the step 122 of the flanging 12 of the cover plate 1, thereby positioning the heat exchange medium circulation pipe 3 that is externally inserted.

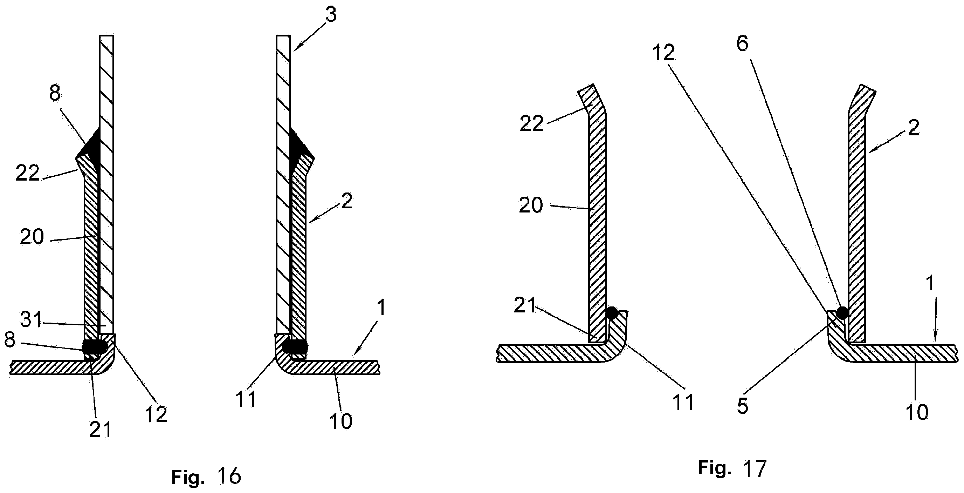

Referring to FIGS. 15 to 17 the flanging 12 of the cover plate 1 is inserted in the first end 21 of the connection pipe 2. The first end 21 of the connection pipe 2 may abut against the body 10 of the cover plate 1. Referring to FIGS. 14 and 16, the plate heat exchanger 100 further includes: a heat exchange medium circulation pipe 3 inserted in the connection pipe 2. The heat exchange medium circulation pipe 3 has an end 31 abutting against an end of the flanging 12 of the cover plate 1.

Referring to FIGS. 15 to 17, the connection pipe 2 includes a column-shaped body 20, the cover plate 1 has a flanging 12 matching the connection pipe 2, and the connection pipe 2 is fixed to the flanging 12 by soldering, brazing or welding. An end 31 of the heat exchange medium circulation pipe 3 abuts against an end of the flanging 12 of the cover plate 1, and a top of the flanging 12 of the cover plate 1 can position the heat exchange medium circulation pipe 3. In addition, the connection pipe has a simple structure and can be conveniently manufactured.

Referring to FIG. 17, a notch 5 is formed on an end surface of the flanging 12 of the cover plate 1 at a side of the end surface of the flanging facing towards an inner wall of the connection pipe 2 in a radial direction. Before soldering or brazing, a solder 6 is placed in the notch 5.

According to the embodiments of the present invention, in the case where the connection pipe is fixed by soldering or brazing, a risk of existence of solder residue on a surface of the heat exchanger can be eliminated, while in the case where the connection pipe is fixed by welding, an adverse influence of the depth of the molten bath on the heat exchanger can be remarkably reduced so that requirements for processing devices and setting of process parameters are no longer rigor. In addition, according to the embodiments of the present invention, the connection pipe and the cover plate can be fixed in a self-adaptive manner so that a prefixing process is no longer needed. According to the embodiments of the present invention, process parameters such as a stress state and a variation of a wall thickness of the connection pipe in processing the connection pipe are fully considered, and a structural design is optimized for these parameters, thereby effectively improving processing performance of the connection pipe and increasing a fatigue strength of the connection pipe.

According to the embodiments of the present invention, a percent defective of the plate heat exchanger due to the soldering, brazing or welding of the connecting pipe can be reduced, the fatigue strength of the connection pipe can be raised so that an increase of a service life of the product is greatly besteaded, and requirements for a fixing device for the connection pipe and setting of corresponding process parameters during manufacturing are reduced.

## Claims

1. A plate heat exchanger (100) comprising:
a cover plate (1) comprising: a body (10); an opening (11) formed in the body (10); and a flanging (12) surrounding the opening (11) and protruding in a direction from the body (10) of the cover plate (1) towards an outside of the heat exchanger (100); and
a connection pipe (2) comprising: a first end (21) and a second end (22) opposite to each other, and a body (20) between the first end (21) and the second end (22),
wherein one of the first end (21) of the connection pipe (2) and the flanging (12) of the cover plate (1) is inserted in the other of the first end (21) of the connection pipe (2) and the flanging (12) of the cover plate (1),
wherein the first end (21) of the connection pipe (2) has a less radial size than the body (20) of the connection pipe (2), the connection pipe (2) further comprises a step (23), and the first end (21) of the connection pipe (2) is inserted in the flanging (12) of the cover plate (1),
wherein the step (23) of the connection pipe (2) abuts against an end of the flanging (12) of the cover plate (1), and
**characterized by** a heat exchange medium circulation pipe (3) inserted in the connection pipe (2), and having an end (31) abutting against the step (23) of the connection pipe (2),
wherein the step (23) is between the body (20) and the first end (21) of the connection pipe (2), and
wherein the flanging (12) has a cylindrical shape.

2. The plate heat exchanger of claim 1, wherein:
the second end (22) of the connection pipe (2) has a tapered shape, and has a radial size gradually increased in a direction from the first end (21) of the connection pipe (2) towards the second end (22) of the connection pipe (2).

3. The plate heat exchanger of claim 1, wherein:
a connection pipe segment composed of the body (20) and the second end (22) of the connection pipe (2) has a tapered shape, and has a radial size gradually increased in a direction from the first end (21) of the connection pipe (2) towards the second end (22) of the connection pipe (2).

4. A plate heat exchanger (100) comprising:
a cover plate (1) comprising: a body (10); an opening (11) formed in the body (10); and a flanging (12) surrounding the opening (11) and protruding in a direction from the body (10) of the cover plate (1) towards an outside of the heat exchanger (100); and
a connection pipe (2) comprising: a first end (21) and a second end (22) opposite to each other, and a body (20) between the first end (21) and the second end (22),
wherein one of the first end (21) of the connection pipe (2) and the flanging (12) of the cover plate (1) is inserted in the other of the first end (21) of the connection pipe (2) and the flanging (12) of the cover plate (1), **characterised in that** the first end (21) of the connection pipe (2) has a greater radial size than the body (20) of the connection pipe (2), the connection pipe (2) further comprises a step (24) between the body (20) and the first end (21) of the connection pipe (2), and the flanging (12) of the cover plate (1) is inserted in the first end (21) of the connection pipe (2), wherein:
the flanging (12) comprises: a tubular part (121) protruding in the direction from the body (10) of the cover plate (1) towards the outside of the heat exchanger (100); and a step (122) which extends radially inwards from the tubular part (121) at a side of the tubular part (121) facing away from the body (10) of the cover plate (1) and which is in contact with the step (24) of the connection pipe (2),
the flanging (12) of the cover plate (1) is inserted in the first end (21) of the connection pipe (2),
a heat exchange medium circulation pipe (3) is inserted in the connection pipe (2),
wherein an end, facing away from the tubular part, of the step (122) of the flanging (12) of the cover plate (1) extends into the body (20) of the connection pipe (2) when viewed in an axial direction of the connection pipe (2), and the heat exchange medium circulation pipe (3) has an end (31) abutting against the end of the step (122) of the flanging (12) of the cover plate (2).

5. The plate heat exchanger of claim 4, wherein: the first end (21) of the connection pipe (2) abuts against the body (10) of the cover plate (1).

6. The plate heat exchanger of claim 4, wherein: the flanging (12) has a cylindrical shape.

## Patentansprüche

1. Plattenwärmetauscher (100), der aufweist:
eine Abdeckplatte (1), die aufweist: einen Körper (10); eine Öffnung (11), die in dem Körper (10) ausgebildet ist; und einen Flansch (12), der die Öffnung (11) umgibt und in eine Richtung von dem Körper (10) der Abdeckplatte (1) zu einer Außenseite des Wärmetauschers (100) vorsteht; und
ein Verbindungsrohr (2), das aufweist: ein erstes Ende (21) und ein zweites Ende (22), die einander gegenüberliegen, und einen Körper (20) zwischen dem ersten Ende (21) und dem zweiten Ende (22),
wobei eines von dem ersten Ende (21) des Verbindungsrohrs (2) und dem Flansch (12) der Abdeckplatte (1) in das andere von dem ersten Ende (21) des Verbindungsrohrs (2) und dem Flansch (12) der Abdeckplatte (1) eingesetzt ist,
wobei das erste Ende (21) des Verbindungsrohrs (2) eine geringere radiale Größe als der Körper (20) des Verbindungsrohrs (2) aufweist, das Verbindungsrohr (2) ferner eine Stufe (23) aufweist und das erste Ende (21) des Verbindungsrohres (2) in den Flansch (12) der Abdeckplatte (1) eingesetzt ist,
wobei die Stufe (23) des Verbindungsrohrs (2) an einem Ende des Flansches (12) der Abdeckplatte (1) anliegt, und
**gekennzeichnet durch** ein Wärmetauschermedium-Zirkulationsrohr (3), das in das Verbindungsrohr (2) eingesetzt ist und ein Ende (31) aufweist, das gegen die Stufe (23) des Verbindungsrohres (2) anliegt,
wobei die Stufe (23) zwischen dem Körper (20) und dem ersten Ende (21) des Verbindungsrohres (2) ist, und
wobei der Flansch (12) eine zylindrische Form aufweist.

2. Plattenwärmetauscher nach Anspruch 1, wobei das zweite Ende (22) des Verbindungsrohres (2) eine verjüngte Form hat und eine radiale Größe aufweist, die in einer Richtung vom ersten Ende (21) des Verbindungsrohres (2) zum zweiten Ende (22) des Verbindungsrohrs (2) hin allmählich zunimmt.

3. Plattenwärmetauscher nach Anspruch 1, wobei ein Verbindungsrohrsegment, das aus dem Körper (20) und dem zweiten Ende (22) des Verbindungsrohres (2) gebildet ist, eine sich verjüngende Form aufweist und eine radiale Größe hat, die in einer Richtung vom ersten Ende (21) des Verbindungsrohres (2) zum zweiten Ende (22) des Verbindungsrohres (2) hin allmählich zunimmt.

4. Plattenwärmetauscher (100), der aufweist:
eine Abdeckplatte (1), die aufweist: einen Körper (10); eine Öffnung (11), die in dem Körper (10) ausgebildet ist; und einen Flansch (12), der die Öffnung (11) umgibt und in einer Richtung von dem Körper (10) der Abdeckplatte (1) zu einer Außenseite des Wärmetauschers (100) vorsteht; und
ein Verbindungsrohr (2), das aufweist: ein erstes Ende (21) und ein zweites Ende (22), die einander gegenüberliegen, und einen Körper (20) zwischen dem ersten Ende (21) und dem zweiten Ende (22), wobei eines von dem ersten Ende (21) des Verbindungsrohrs (2) und dem Flansch (12) der Abdeckplatte (1) in das andere von dem ersten Ende (21) des Verbindungsrohres (2) und dem Flansch (12) der Abdeckplatte (1) eingesetzt ist, **dadurch gekennzeichnet, dass** das erste Ende (21) des Verbindungsrohres (2) eine größere radiale Größe als der Körper (20) des Verbindungsrohres (2) aufweist, das Verbindungsrohr (2) ferner eine Stufe (24) zwischen dem Körper und dem ersten Ende (21) des Verbindungsrohrs (2) aufweist, und der Flansch (12) der Abdeckplatte (1) in das erste Ende (21) des Verbindungsrohres (2) eingesetzt ist, wobei:
der Flansch (12) aufweist: einen rohrförmigen Teil (121), der in der Richtung vom Körper (10) der Abdeckplatte (1) zur Außenseite des Wärmetauschers (100) vorsteht; und eine Stufe (122), die sich von dem rohrförmigen Teil (121) an einer vom Körper (10) der Abdeckplatte (1) abgewandten Seite des rohrförmigen Teils (121) radial nach innen erstreckt und die in Kontakt mit der Stufe (24) des Anschlussrohrs (2) steht, der Flansch (12) der Abdeckplatte (1) in das erste Ende (21) des Verbindungsrohrs (2) eingesetzt ist, in das Verbindungsrohr (2) ein Wärmetauschermedium-Zirkulationsrohr (3) eingesetzt ist, wobei ein dem rohrförmigen Teil abgewandtes Ende der Stufe (122) des Flansches (12) der Abdeckplatte (1) in axialer Richtung des Verbindungsrohres (2) gesehen in den Körper (20) des Verbindungsrohres (2) hineinragt, und das Wärmetauschermedium-Zirkulationsrohr (3) ein Ende (31) aufweist, das an dem Ende der Stufe (122) des Flansches (12) der Abdeckplatte (1) anliegt.

5. Plattenwärmetauscher nach Anspruch 4, wobei das erste Ende (21) des Verbindungsrohrs (2) an dem Körper (10) der Abdeckplatte (1) anliegt.

6. Plattenwärmetauscher nach Anspruch 4, wobei der Flansch (12) eine zylindrische Form aufweist.

## Revendications

1. Échangeur thermique à plaque (100) comprenant :
une plaque de couverture (1) comprenant : un corps (10) ; une ouverture (11) formée dans le corps (10) ; et une bride (12) entourant l'ouverture (11) et faisant saillie dans une direction à partir du corps (10) de la plaque de couverture (1) en direction d'un extérieur de l'échangeur thermique (100) ; et
un tube de connexion (2) comprenant : une première extrémité (21) et une seconde extrémité (22) opposées l'une à l'autre, et un corps (20) entre la première extrémité (21) et la seconde extrémité (22),
dans lequel une de la première extrémité (21) du tube de connexion (2) et de la bride (12) de la plaque de couverture (1) est insérée dans l'autre de la première extrémité (21) du tube de connexion (2) et de la bride (12) de la plaque de couverture (1),
dans lequel la première extrémité (21) du tube de connexion (2) présente une taille radiale plus petite que le corps (20) du tube de connexion (2), le tube de connexion (2) comprend en outre un cran (23), et la première extrémité (21) du tube de connexion (2) est insérée dans la bride (12) de la plaque de couverture (1),
dans lequel le cran (23) du tube de connexion (2) est adjacent à une extrémité de la bride (12) de la plaque de couverture (1) et
**caractérisé en ce que** un tube de circulation de fluide d'échange thermique (3) inséré dans le tube de connexion (2) et ayant une extrémité (31) adjacente au cran (23) du tube de connexion (2),
dans lequel cran (23) est entre le corps (20) et la première extrémité (21) du tube de connexion (2)
dans lequel la bride (12) présente une forme cylindrique.

2. Échangeur thermique à plaque selon la revendication 1, dans lequel :
la seconde extrémité (22) du tube de connexion (2) présente une forme conique et présente une taille radiale qui augmente graduellement dans une direction à partir de la première extrémité (21) du tube de connexion (2) en direction de la seconde extrémité (22) du tube de connexion (2).

3. Échangeur thermique à plaque selon la revendication 1, dans lequel :
un segment de tube de connexion composé du corps (20) et de la seconde extrémité (22) du tube de connexion (2) présente une forme conique et présente une taille radiale qui augmente graduellement dans une direction à partir de la première extrémité (21) du tube de connexion (2) en direction de la seconde extrémité (22) du tube de connexion (2).

4. Échangeur thermique à plaque (100) comprenant :
une plaque de couverture (1) comprenant : un corps (10) ; une ouverture (11) formée dans le corps (10) ; et une bride (12) entourant l'ouverture (11) et
faisant saillie dans une direction à partir du corps (10) de la plaque de couverture (1) en direction d'un extérieur de l'échangeur thermique (100) ; et
un tube de connexion (2) comprenant : une première extrémité (21) et une seconde extrémité (22) opposées l'une à l'autre, et un corps (20) entre la première extrémité (21) et la seconde extrémité (22),
dans lequel une de la première extrémité (21) du tube de connexion (2) et de la bride (12) de la plaque de couverture (1) est insérée dans l'autre de la première extrémité (21) du tube de connexion (2) et de la bride (12) de la plaque de couverture (1),
**caractérisé en ce que** la première extrémité (21) du tube de connexion (2) présente une taille radiale plus grande que le corps (20) du tube de connexion (2), le tube de connexion (2) comprend en outre un cran (24) entre le corps (20) et la première extrémité (21) du tube de connexion (2), et la bride (12) de la plaque de couverture (1) est insérée dans la première extrémité (21) du tube de connexion (2), dans lequel :
la bride (12) comprend : une partie tubulaire (121) faisant saillie dans la direction à partir du corps (10) de la plaque de couverture (1) en direction de l'extérieur de l'échangeur thermique (100) ; et un cran (122) qui s'étend radialement vers l'intérieur à partir de la pièce tubulaire (121) sur un côté de la pièce tubulaire (121) orienté à distance du corps (10) de la plaque de couverture (1) et qui est en contact avec le cran (24) du tube de connexion (2),
la bride (12) de la plaque de couverture (1) est insérée dans la première extrémité (21) du tube de connexion (2),
un tube de circulation de fluide d'échange thermique (3) est inséré dans le tube de connexion (2),
dans lequel une extrémité, orientée à distance de la pièce tubulaire, du cran (122) de la bride (12) de la plaque de couverture (1) s'étend jusque dans le corps (20) du tube de connexion (2) lorsque vu dans une direction axiale du tube de connexion (2), et le tube de circulation de fluide d'échange thermique (3) présente une extrémité (31) adjacente à l'extrémité du cran (122) de la bride (12) de la plaque de couverture (2) .

5. Échangeur thermique à plaque selon la revendication 4, dans lequel :
la première extrémité (21) du tube de connexion (2) est adjacente au corps (10) de la plaque de couverture (1) .

6. Échangeur thermique à plaque selon la revendication 4, dans lequel :
la bride (12) présente une forme cylindrique.
